# EUROPÄISCHE PATENTSCHRIFT

(11) **EP 1 869 628 B1**
(45) Veröffentlichungstag und Bekanntmachung des Hinweises auf die Patenterteilung: **05.10.2011**
(21) Anmeldenummer: 06722786.8
(22) Anmeldetag: 06.04.2006
(51) Int. Cl.: B64D 11/04

(54) **SYSTEM UND VERFAHREN ZUR ÜBERWACHUNG KONFEKTIONIERTER VORGEFERTIGTER SPEISEN**
SYSTEM AND METHOD FOR MONITORING MANUFACTURED PRE-PREPARED MEALS
SYSTEME ET PROCEDE DE CONTROLE D'ALIMENTS PREPARES CONFECTIONNES

(30) Priorität: 07.04.2005 DE 102005016700
(43) Veröffentlichungstag der Anmeldung: 26.12.2007
(73) Patentinhaber: MGS Modular Galley Systems AG, 89275 Elchingen (DE)
(72) Erfinder: WALTER, Hubert, Eric, 89073 Ulm (DE); HAAS, Karl-Heinz, 88480 Achtstetten (DE); JANS, Roland, 89073 Ulm (DE)
(74) Vertreter: Lorenz, Markus
(86) Internationale Anmeldenummer: PCT/DE2006/000650
(87) Internationale Veröffentlichungsnummer: WO 2006/105784

(56) Entgegenhaltungen:
- WO-A-03/005295
- JP-A- 2002 358 591
- JP-A- 2003 267 555
- US-A- 5 798 694
- US-B1- 6 445 976

## Beschreibung

Die Erfindung betrifft ein System und Verfahren zur Überwachung vorgefertigter Speisen, die als mehrere Portionen konfektioniert sein können.

Die Konfektionierung erfolgt dabei mittels tablettförmiger Behältnisse (Shelfs) in denen Behältnisse, die vorgefertigte Speisen enthalten, lokal definiert angeordnet und möglichst auch durch entsprechende Gestaltung der jeweiligen tablettförmigen Behältnisse gegen ein Verrutschen fixiert werden können, was durch entsprechende Aufnahmen für Behältnisse mit Speisen an tablettförmigen Behältnissen erreichbar ist. Es können aber auch ähnliche Behältnisse eingesetzt werden, beispielsweise solche die auch mit Deckeln verschlossen sein können. Dabei sollte aber gewährleistet sein, dass eine draht- und berührungslose Informationsübertragung von und ggf. auch in Informationsträger gewährleistet bleibt. Neben Speisen und Getränken können auch weitere Güter aus dem Cateringbereich vorhanden sein.

Ein solches tablettförmiges Element kann für die Konfektionierung mit Behältnissen, die Speisen enthalten, die nachfolgend vor dem Verzehr erwärmt werden müssen allein bestückt werden. Es besteht aber auch die Möglichkeit, auf tablettförmigen Behältnissen, Behältnisse mit Speisen, die auch kalt verzehrt werden können zu positionieren und ggf. andere Gegenstände oder auch Getränke in einem solchem tablettförmigen Behältnis aufzunehmen.

Üblicherweise erfolgt die Konfektionierung der unterschiedlichen Speisen und ggf. auch Getränke in zentralisierter Form an einem Ort und es erfolgt nachfolgend eine Lagerung, ein Transport über eine auch unterbrochene Transportkette bis hin zum Endverbraucher.

Der Einsatz ist insbesondere für die Bereitstellung von Nahrungsmitteln und Getränken für den Verzehr in Verkehrsmitteln, ganz besonders bevorzugt in Flugzeugen vorgesehen.

Bei den herkömmlichen Lösungen treten aber Probleme auf, da ein Nachweis über die Einhaltung einer Kühlkette, das jeweilige Verfallsdatum, bis zu dem die Speisen nicht verzehrt werden dürfen und auch ein Nachweis über die Lieferung der Konfektionierung vom Konfektionierer (Caterer) bis hin zum Endverbrauch nicht oder nur unzureichend erreicht werden kann.

Dadurch können Fehllieferungen nicht oder nur mit erhöhtem Aufwand erkannt werden.

Die Einhaltung einer vorgegebenen Kühlkette ist außerdem nicht möglich und außerdem besteht die Gefahr, dass so entsprechend konfektionierte Speisen nach Ablauf Ihrer Haltbarkeit verzehrt werden und es so zur Beeinträchtigung der Gesundheit entsprechender Verbraucher kommen kann.

Eine Überwachung des Zustands eines Lebensmittels innerhalb eines Behältnisses ist bereits aus der US 5798694 bekannt. Darin offenbart ist ein als Herd verwendbarer Aufbewahrungsplatz für Lebensmittelbehälter. Der jeweilige Behälter ist mit einem Etikett ausgestattet, dem Daten über den Zustand des Lebensmittels im Behälter zu entnehmen sind. Mittels Sensoren innerhalb des Behälters können unter anderem Temperatur, Feuchtigkeit oder Lebensmittelqualität überwacht und auf dem Etikett abgelegt werden.

Weiterhin offenbart die WO 03/005295 A1 einen Lebensmittel- oder Getränkeautomaten, der unter anderem die Speisen oder Getränke erwärmen kann, bevor sie ausgegeben werden. Diese Erwärmung erfolgt mittels Daten, die aus Etikettdaten der Speise- oder Getränkebehälter ausgelesen werden.

Es ist nun Aufgabe der Erfindung, ein System zur Verfügung stellen zu können, mit dem entsprechend konfektionierte vorgefertigte Speisen ausgehend von ihrer Konfektionierung bis hin zum letztendlichen Verbrauch überwacht werden können. Dabei soll beim Einführen eines konfektionierten tablettförmigen Behältnisses in ein Gerät zum Erwärmen von Speisen oder Getränken die Erwärmung lokal gezielt nur an Orten erfolgen, an denen zu erwärmende Speisen positioniert sind.

Erfindungsgemäß wird diese Aufgabe mit einem System, das die Merkmale des Anspruchs 1 aufweist, gelöst. Dabei kann mit einem Verfahren mit den Merkmalen des Anspruchs 17 vorgegangen werden.

Vorteilhafte Ausgestaltungen und Weiterbildungen der Erfindung können mit in den untergeordneten Ansprüchen bezeichneten Merkmalen erreicht werden.

Hierzu soll an einem tablettförmigen Behältnis ein Informationsträger angebracht sein. Dabei kann ein solcher Informationsträger unmittelbar am tablettförmigen Behältnis aber auch an zumindest einem Behältnis für Speisen oder Getränke angebracht sein, dass dann wiederum mittels eines tablettförmigen Behältnisses aufgenommen und gehalten ist. Es können aber auch ähnlich ausgebildete Behältnisse, beispielsweise schachtelförmige eingesetzt werden.

Ein solcher Informationsträger sollte geeignet sein, um die jeweiligen Informationen auslesen zu können.

Die Informationen sollen an mindestens einer bevor-zugt zwei Auslesestationen ausgelesen werden können. Die Auslesestationen können auch so ausgebildet sein, dass zusätzlich eine Informationsübertragung auf den Informationsträger, also ein Einlesen oder Einschreiben von Informationen möglich ist.

Bei den auf dem Informationsträger abgelegten Informationen kann es sich um das jeweilige Herstellungs-, Konfektionierungs- und/oder das maximale Haltbarkeitsdatum handeln. Daneben können auch Informationen über die Menge, Masse oder Anzahl genutzt werden. Unter dem maximalen Haltbarkeitsdatum sollte aber das Haltbarkeitsdatum einer Speise bzw. auch eines Getränkes an einem tablettförmigen Behältnis gemeint sein, das/die kürzeste Haltbarkeitsdauer aufweist.

Bevorzugte Informationsträger sind solche, die die entsprechenden Informationen in elektronischer Form speichern können und die berührungslos mittels elektromagnetischer Wellen zumindest ausgelesen werden können, was z. B. mit an sich bekannter RFID-Technik möglich ist. In diesem Fall ist ein Halbleiterschaltkreiselement mit einer für das Aussenden von Informationen geeigneten Antenne auf einem Träger geeignet. Das Auslesen kann mit geeigneten Systemen, die ebenfalls über eine Antenne verfügen über einen Abstand von einigen Zentimetern bis hin zu mehreren Metern erfolgen. Die Übertragung der Informationen erfolgt dabei im Wesentlichen induktiv und/oder kapazitiv, wobei in diesem Fall auch die Möglichkeit gegeben sein kann, nachträglich entsprechende Informationen auf einen solchen Informationsträger abzuspeichern.

Dies ist z. B. vorteilhaft, wenn während des Transportes und der Lagerung entsprechende Nachweisinformationen abgespeichert werden sollen.

So können entsprechende Informationen über den Eingang in eine Lagerhalle, eine Kühlhalle, das Einsetzen in einen Speisentransportwagen (Trolley) eingespeichert werden.

Dies betrifft den jeweiligen Ort und im Falle einer Kühlung können zusätzlich die jeweiligen Zeiten und Lagertemperaturen eingegeben werden. An den jeweiligen Orten, an denen ein Auslesen von Informationen aus Informationsträgern erfolgt, können diese zwischengespeichert und nachfolgend oder ggf. zeitgleich bzw. zeitnah an eine zentrale Datenverarbeitungseinheit übermittelt werden, mit der eine Überwachung der jeweiligen Logistik erfolgt.

Für eine lückenlose Überwachung einer vorgegebenen einzuhaltenden Kühlkette kann mit dem Informationsträger ein zusätzlicher Temperatursensor eingesetzt werden, der entsprechende Temperaturmesssignale kontinuierlich oder auch sequenziell in bestimmten vorgebbaren Zeittakten als Zusatzinformationen auf den Informationsträger überträgt. In diesem Falle sollte ein zusätzliches Element für die Speicherung von Elektroenergie vorhanden sein, das vorteilhaft wieder auflad- oder auch nachladbar ist, wobei solche Aufladungen eines solchen Elektroenergiespeicherelementes möglichst draht- und berührungslos auf induktivem oder kapazitivem Weg erfolgen können sollte.

Des Weiteren sind auf einem Informationsträger auch neben anderen charakteristischen zusätzliche Informationen abgespeichert, die bei der Erwärmung von entsprechenden Speisen für die Steuerung eines Gerätes zur Erwärmung benutzt werden können. So erfordern beispielsweise unterschiedliche Speisen entsprechend unterschiedliche Erwärmungsbedingungen, was die jeweiligen Temperaturen, Heizraten und die maximale Erwärmungsdauer im Wesentlichen betrifft. Außerdem sind Informationen auf dem Informationsträger abgespeichert, die die jeweilige Position von zu erwärmenden Speisen und von nicht zu erwärmenden Speisen oder Getränken auf einem tablettförmigen Behältnis wiedergeben, so dass beim Einführen eines konfektionierten tablettförmigen Behältnisses in eine Ofeneinheit, in der bevorzugt eine induktive Erwärmung durchzuführen ist, die Erwärmung dann lokal gezielt nur an Orten, an denen zur erwärmende Speisen positioniert sind, erfolgt.

Des Weiteren sollte an einem solchen Gerät/Ofen für die Erwärmung von Speisen auch zumindest eine Ausleseeinheit für entsprechende Informationen vorhanden sein, die dann mit der Steuerung dieses Gerätes /Ofen verbunden ist.

Vorteilhaft sollte eine Möglichkeit vorgesehen sein, mit der bei einem ggf. vorkommenden Auslesen von Informationen, die den Ablauf einer maximalen Haltbarkeitsdauer von Speisen oder Getränken wiedergibt, ein Warnsignal generiert werden, das diese Information dann optisch und/oder akustisch anzeigt und den Bediener warnt. Eine so erkannte Information kann aber auch so ausgewertet und an die Steuerung des Gerätes/Ofens übertragen werden, was keine Erwärmung von Speisen nach Ablauf der Haltbarkeitsdauer in einem solchen Gerät/Ofen erfolgen kann und mit nahezu 100-prozentiger Sicherheit gesundheitliche Beeinträchtigung verhindert werden können.

Die bereits angesprochenen Lese- und/oder Sendeeinheiten von Informationen der Informationsträger können an jeweiligen Toren durch die die kommissionierten Speisen und Getränke in Lager- und Transporteinheiten ein- und ausgeführt werden können angeordnet sein. Dies betrifft Tore oder Liefereingänge von Lager- und Kühlhallen. Auch an Transportmitteln, wie LKWs oder Schienenfahrzeugen können an den jeweiligen Türen oder Toren entsprechende Lese- und Sendeeinheiten für die Informationen vorhanden sein. An solchen Orten ist die Elektroenergieversorgung für die Lese-und/oder Sendeeinheiten in der Regel problemlos möglich.

Bei mobilen Speisentransportwagen, wie sie häufig in Flugzeugen eingesetzt werden, sollten aber ebenfalls bevorzugt im Bereich oder der Nähe von Türen entsprechende Lese- und/oder Sendeeinheiten für Informationen angebracht sein. Solche Speisentransportwagen verfügen üblicherweise nicht über eigene Elektroenergiespeicher oder Anschlüsse für Elektroenergie. Letztere sind häufig auch ungünstig, da eine Elektroenergieversorgung über Leitungen bei der Nutzung von Speisetransporten ungünstig ist.

An den Speisentransportwagen können deshalb Elektroenergiespeicherelemente angebracht sein, die induktiv und/oder kapazitiv aufladbar sind, was an entsprechenden Ladestationen möglich ist. Hierfür muss der jeweilige Speisentransportwagen lediglich entsprechend positioniert werden, so dass eine berührungslose Elektroenergieübertragung induktiv und/oder kapazitiv auf einen entsprechend ausgebildeten Elektroenergiespeicher erfolgen kann. Entsprechende Ladestationen können an bestimmten zentralen Punkten auch innerhalb von Verkehrsmitteln, z. B. Flugzeugen vorhanden sein, so dass ein entsprechender Speisentransportwagen lediglich in einem ausreichenden Abstand zu einer solchen Ladestation positioniert werden muss. Mit aufgeladenem Elektroenergiespeicher kann er dann mobil genutzt werden.

An einem so ausgerüsteten Speisentransportwagen kann ein zusätzlicher auslesbarer Zwischenspeicher für Informationen vorhanden sein, dessen zwischengespeicherte Informationen über ggf. vorhandene Anschlüsse ausgelesen und wie vorab bereits angesprochen zu einer zentralen Datenverarbeitungseinheit übertragen werden. Das Auslesen von Informationen eines solchen Zwischenspeichers kann ebenfalls drahtlos über RFID-Technik erfolgen.

Entsprechend geeignete Möglichkeiten zur Ausbildung von entsprechenden Antennen, Datenspeichern und E-lektroenergiespeichern können auch nachträglich an Speisentransportwagen installiert werden. So können beispielsweise Spulen am Gehäuse von Speisentransportwagen installiert werden, wobei bevorzugt entsprechende Fugen ausgefräst werden sollten, in die einzelnen Windungen von Spulen eingelegt werden.

Solche Antennen sollten an den äußeren Wänden oder auch an allen Türen von Speisentransportwagen vorhanden sein, da diese in der Regel beidseitig bestückt werden können und auch von beiden Seiten eine Entnahme möglich ist.

An Speisentransportwagen können auch elektronische Anzeigeelemente (Displays) installiert sein, so dass von außen ohne weiteres Informationen über den Inhalt erhalten werden können. Die jeweils angezeigten Informationen können dabei auch gezielt ausgewählt werden, was z.B. über eine Elektronikeinheit mit Eingabemöglichkeit über eine Tastatur oder mittel Touch Screen-Technik möglich ist. So kann bei entsprechender Auswahl beispielsweise der jeweilige Zielort von außen sichtbar angezeigt werden. Dabei können Anzeigeelemente eingesetzt sein, die auch in der Lage sind ohne weiteren Anschluss oder auch nach Abschaltung von Elektroenergie die Informationen weiter anzeigen zu können.

Empfangs- und Sendeelemente, wie vorab bereits angesprochen können aber auch in Lagerbehältnissen innerhalb von Küchen (Galleys) vorhanden sein. Auch hier treffen die vorab genannten Aussagen über eine mögliche Zwischenspeicherung und Übertragung von entsprechenden Informationen an eine zentrale Datenverarbeitungseinheit zu. So lässt sich über die lokal erfassten und ausgelesenen Informationen ein nahezu lückenloser Nachweis über die Lagerung und den Transport bis hin zum Verzehr führen, wobei in einer bevorzugten Ausführungsform auch ein Nachweis der Einhaltung einer Kühlkette möglich ist.

Außerdem können an Speisentransportwagen auch die entsprechenden Identifikationsinformationen für den jeweiligen Speisentransportwagen abgespeichert sein, so dass zumindest ein Nachweis vorhanden ist, mit dem der letzte erfasste Standort des jeweiligen Speisentransportwagens möglich ist.

Das erfindungsgemäße System erleichtert außerdem den Aufwand für Inventuren und die Abrechnung, wobei letzteres auch für bestimmte Artikel zutrifft, die nicht unbedingt Speisen und Getränke sein müssen, sondern auch innerhalb von Verkehrsmitteln verkaufte Artikel, beispielsweise Duty-free-Artikel.

Das erfindungsgemäße System kann nicht nur vorteilhaft für die Versorgung von Passagieren in Verkehrsmitteln sondern auch in anderen Bereichen benutzt werden, wie dies beispielsweise in Kliniken oder bei großen Catering-Unternehmen der Fall ist.

Mit erfindungsgemäßen Systemen können also eine Komplexe Überwachung verschiedenster eingesetzter Elemente, wie die konfektionierten tablettförmigen Behältnisse und Speisentransportwagen mit Inhalt und jeweiligem Ort erfolgen, wobei letzteres zumindest auf den Standort zutrifft, an dem zuletzt entsprechende Informationen von Informationsträgern ausgelesen worden sind, zutrifft. Dabei können die Inhaltsinformationen auch genutzt werden, um elektronisch, also ohne jegliche zusätzliche schriftliche Dokumentation, Erkenntnisse über den jeweiligen Inhalt zu erhalten und zu verarbeiten. Dies betrifft z.B. die Nachbestellung oder auch die Abrechnung von verbrauchten oder verkauften Artikeln, so dass Differenzen bei Abrechnung oder auch Inventarisierungen vermieden werden können und der Verwaltungsaufwand reduziert werden kann.

Werden solche Informationen in einem mobilen Verkehrsmittel, wie einem Schienenfahrzeug oder einem Flugzeug ausgelesen, können sie auch drahtlos mittels an sich bekannter Sende- und Empfangssysteme, beispielsweise als GMS- oder UMTS-Signale übertragen und einer zentralen Datenverarbeitungseinheit zugeführt werden, so dass dadurch auch eine zeitnahe Überwachung und Kontrolle möglich ist.

Bei Speisen und Getränken kann mit dem erfindungsgemäßen System eine elektronische Erfassung, Weiterverarbeitung und Auswertung von HACCP-Daten nach ISO 9000 erfolgen, so dass papierlos gearbeitet werden kann.

Selbstverständlich kann eine Speicherung und Auswertung von erfassten Informationen von Informationsträgern nicht nur an der bereits mehrfach angesprochenen zentralen Datenverarbeitungseinheit, sondern auch an zwischengeschalteten Datenverarbeitungseinheiten allein oder zusätzlich erfolgen.

An den Stationen für das Auslesen von mittels elektromagnetischer Wellen übertragenen Informationen von den jeweiligen Informationsträgern, z.B. mit RFID-Technik sollten die entsprechenden Antennen oder Empfänger für die Erfassung von drahtlos übertragenen Informationen so ausgebildet sein, dass die Informationsträger durch die jeweiligen Windungen von entsprechenden Spulen hindurchgeführt werden können und dabei zumindest das Auslesen von Informationen, bevorzugt jedoch auch dass Übertragen von zusätzlichen neuen Informationen erreichbar ist.

Diese Informationsträger, die in RFID-Technik betrieben werden können, können beispielsweise so genannte "Smart-Label" in Etikettenform sein, die relativ einfach über eine Klebefolie am vorkonfektionierten tablettförmigen Behältnis befestigt werden. Der Betrieb kann mit einer standardisierten Übertragungsfrequenz für Informationen, beispielsweise 13,56 MHz erfolgen.

Am Ort der Konfektionierung können dann bestimmte Daten gespeichert werden, was insbesondere die Identifikationsdaten für ein konfektioniertes tablettförmiges oder ähnlich ausgebildetes Behältnis betrifft.

Ein solcher Informationsträger kann dabei an einem geschützten Ort am tablettförmigen Behältnis angebracht sein, so dass er weitestgehend vor mechanischer Beschädigung geschützt wird. Die Befestigung solcher Informationsträger, wie auch das Einschreiben der jeweiligen Informationen können automatisiert erfolgen, so dass auch hierdurch die Kosten reduziert und Fehler verhindert werden können.

An Auslese- und/oder Sendeeinheiten für Informationen können mehrere Antennen für die Informationsübertragung vorhanden sein, die bevorzugt über Multiplexe die Datenübertragung- und Speicherung realisieren. Dabei können die Antennen auch für die unterschiedlichen Frequenzen, die für die Übertragung von Informationen von und auch in Informationsträger genutzt werden, ausgelegt sein, so dass die unterschiedlichen Übertragungssysteme berücksichtigt werden können.

## Patentansprüche

1. System zur Überwachung konfektionierter vorgefertigter Speisen, die auf tablettförmigen Behältnissen angeordnet sind und dort ein Informationsträger befestigt ist, der speisenspezifische Daten enthält, die an mindestens einer Auslesestation auslesbar sind, so dass ein Nachweis über Herstellungs- Lagerungs- und/oder Kühlbedingungen und -orte erreichbar ist, wobei an einem Gerät zur Erwärmung von Speisen oder Getränken eine Ausleseeinheit für auf dem Informationsträger gespeicherten Informationen vorhanden ist, und wobei die Ausleseeinheit des Gerätes mit dessen Steuerung verbunden ist, **dadurch gekennzeichnet, dass** die Informationen Erwärmungsbedingungen und Positionen von zu erwärmenden und nicht zu erwärmenden Speisen oder Getränken auf dem tablettförmigen Behältnis wiedergeben, so dass beim Einführen eines der konfektionierten tablettförmigen Behältnisse in das Gerät die Erwärmung dann lokal gezielt nur an Orten, an denen zu erwärmende Speisen positioniert sind, erfolgt.

2. System nach Anspruch 1, **dadurch gekennzeichnet, dass** die Informationen berührungslos mittels elektromagnetischer Wellen in den Informationsträger einles- und/oder von diesem auslesbar sind.

3. System nach Anspruch 2, **dadurch gekennzeichnet, dass** die Informationen in RFID-Technik vom Informationsträger auslesbar sind.

4. System nach einem der vorhergehenden Ansprüche, **dadurch gekennzeichnet, dass** zusätzliche Informationen über Lagerung und Transport auf dem Informationsträger speicherbar sind.

5. System nach einem der vorhergehenden Ansprüche, **dadurch gekennzeichnet, dass** ein Informationsträger unmittelbar an einem tablettförmigen Behältnis angebracht sind.

6. System nach einem der vorhergehenden Ansprüche, **dadurch gekennzeichnet, dass** ein Informationsträger an einem Behältnis für Speisen oder Getränke angebracht ist.

7. System nach einem der vorhergehenden Ansprüche, **dadurch gekennzeichnet, dass** ein Temperatursensor vorhanden ist, dessen Temperaturmesssignale auf den Informationsträger übertragbar sind.

8. System nach einem der vorhergehenden Ansprüche, **dadurch gekennzeichnet, dass** ein Element zur Speicherung von Elektroenergie vorhanden ist.

9. System nach Anspruch 8, **dadurch gekennzeichnet, dass** das Element zur Speicherung von Elektroenergie draht- und berührungslos aufladbar ist.

10. System nach einem der vorhergehenden Ansprüche, **dadurch gekennzeichnet, dass** im Bereich von Türen Lese- und/oder Sendeeinheiten für Informationen angebracht sind.

11. System nach Anspruch 10, **dadurch gekennzeichnet, dass** an Speisetransportwagen induktiv und/oder kapazitiv aufladbare Elektroenergiespeicherelemente angebracht sind.

12. System nach Anspruch 10 oder 11, **dadurch gekennzeichnet, dass** Antennen in/an Gehäusen der Speisetransportwagen installiert sind.

13. System nach Anspruch 12, **dadurch gekennzeichnet, dass** Antennen in Fugen von Gehäusen eingelassen sind.

14. System nach einem der Ansprüche 10 bis 13, **dadurch gekennzeichnet, dass** an Speisentransportwagen ein Zwischenspeicher zum Auslesen von Informationen vorhanden ist.

15. System nach einem der Ansprüche 10 bis 14, **dadurch gekennzeichnet, dass** an Speisentransportwagen elektronische Anzeigeelemente für die visuelle Anzeige von auf Informationsträgern und/oder im Zwischenspeicher vorhandenen Informationen angebracht sind.

16. System nach einem der vorhergehenden Ansprüche, **dadurch gekennzeichnet, dass** an Auslese- und Sendeeinheiten mehrere Antennen für eine Informationsübertragung vorhanden sind.

17. Verfahren zur Überwachung konfektionierter vorgefertigter Speisen, die auf tablettförmigen Behältnissen angeordnet sind, bei dem auf einem Informationsträger speisenspezifische Daten gespeichert sind, die für einen Nachweis von Herstellungs-, Lagerungs- und/oder Kühlbedingungen sowie von Herstellungs- oder Lagerungsorten an mindestens einer Auslesestation ausgelesen werden, wobei mit den auf den Informationsträgern gespeicherten und berührungslos ausgelesenen Informationen ein Gerät zur Erwärmung von Speisen gesteuert wird, **dadurch gekennzeichnet, dass** die Informationen Erwärmungsbedingungen betreffen und dass dus gerät der Steuerung die jeweilige Position von Speisen und Getränken auf einem tablettförmigen Behältnis berücksichtigt und nur lokal gezielt an Orten, an denen zu erwärmende Speisen positioniert sind, eine Erwärmung durchführt.

18. Verfahren nach Anspruch 17, **dadurch gekennzeichnet, dass** die Informationen als Nachweis während des Transports und der Lagerung gespeichert werden.

19. Verfahren nach Anspruch 17, **dadurch gekennzeichnet, dass** die Informationen draht- und berührungslos gespeichert werden.

20. Verfahren nach einem der Ansprüche 17 bis 19, **dadurch gekennzeichnet, dass** während des Transportes und der Lagerung gemessene Temperatursignale als Informationen auf dem Informationsträger gespeichert werden.

21. Verfahren nach einem der Ansprüche 17 bis 20, **dadurch gekennzeichnet, dass** beim Erkennen eines Ablaufs einer maximalen Haltbarkeitsdauer von Speisen oder Getränken ein Warnsignal generiert wird.

22. Verfahren nach einem der Ansprüche 17 bis 21, **dadurch gekennzeichnet, dass** während des Transportes in mobilen Verkehrsmitteln eine drahtlose Informationsübertragung über Sendeund Empfangssysteme zu einer zentralen Datenverarbeitungseinheit durchgeführt wird.

23. Verfahren nach einem der Ansprüche 17 bis 22, **dadurch gekennzeichnet, dass** die Übertragung von Informationen in und/oder aus Informationsträger induktiv oder kapazitiv durchgeführt wird.

24. Verfahren nach einem der Ansprüche 17 bis 234, **dadurch gekennzeichnet, dass** auf Informationsträgern gespeicherte Informationen an elektronischen Anzeigeelementen, die an Speisentransportwagen, in denen Speisen und Getränke enthalten sind, visuell von außen erfassbar gemacht werden.

25. Verfahren nach Anspruch 24, **dadurch gekennzeichnet, dass** ausgewählte gespeicherte Informationen angezeigt werden.

26. Verfahren nach Anspruch 24 oder 25, **dadurch gekennzeichnet, dass** an Anzeigeelementen auch nach Abschaltung elektrischer Energie Informationen angezeigt werden.

27. Verfahren nach einem der Ansprüche 17 bis 26, **dadurch gekennzeichnet, dass** an Ausleseund/oder Sendeeinheiten für Informationen mit mehreren Antennen eine multiplexe Datenübertragung und Speicherung realisiert wird.

## Claims

1. System for monitoring ready-made pre-prepared meals which are arranged on tray-like receptacles and an information-carrier is attached there which contains meal-specific data that are capable of being read out at at least one readout station so that a verification of conditions and locations of production, storage and/or refrigeration can be obtained, whereby a readout unit for information stored on the information-carrier is present on a device for heating meals or beverages, and whereby the readout unit of the device is connected to the controller thereof, **characterised in that** the information represents heating conditions and positions of meals or beverages to be heated and not to be heated on the tray-like receptacle, so that when one of the made-up tray-like receptacles is introduced into the device the heating then takes place locally in selective manner only at locations at which meals to be heated are positioned.

2. System according to Claim 1, **characterised in that** the information is capable of being read into the information-carrier or read out from the latter in contactless manner by means of electromagnetic waves.

3. System according to Claim 2, **characterised in that** the information is capable of being read out from the information-carrier using RFID technology.

4. System according to one of the preceding claims, **characterised in that** additional information about storage and transportation is capable of being stored on the information-carrier.

5. System according to one of the preceding claims, **characterised in that** an information-carrier is fitted directly to a tray-like receptacle.

6. System according to one of the preceding claims, **characterised in that** an information-carrier is fitted to a receptacle for meals or beverages.

7. System according to one of the preceding claims, **characterised in that** a temperature sensor is present, the temperature signals of which are capable of being transmitted to the information-carrier.

8. System according to one of the preceding claims, **characterised in that** an element for storing electrical energy is present.

9. System according to Claim 8, **characterised in that** the element for storing electrical energy is capable of being charged in wireless and contactless manner.

10. System according to one of the preceding claims, **characterised in that** reading units and/or transmitting units are fitted in the region of doors.

11. System according to Claim 10, **characterised in that** elements storing electrical energy that are capable of being charged inductively and/or capacitively are fitted to food trolleys.

12. System according to Claim 10 or 11, **characterised in that** antennas are installed in or on housings of the food trolleys.

13. System according to Claim 12, **characterised in that** antennas are recessed in joints of housings.

14. System according to one of Claims 10 to 13, **characterised in that** an intermediate memory for reading out information is present on food trolleys.

15. System according to one of Claims 10 to 14, **characterised in that** electronic display elements for the visual display of information available on information-carriers and/or in the intermediate memory are fitted to food trolleys.

16. System according to one of the preceding claims, **characterised in that** several antennas for transmission of information are present on readout units and transmitting units.

17. Process for monitoring ready-made pre-prepared meals which are arranged on tray-like receptacles, wherein meal-specific data which are read out at at least one readout station for a verification of conditions of production, storage and/or refrigeration and also for a verification of locations of production or storage are stored on an information-carrier, whereby a device for heating meals is controlled with the information stored on the information-carriers and read out in contactless manner, **characterised in that** the information relates to heating conditions and **in that** in the course of the control the device takes into consideration the respective position of meals and beverages on a tray-like receptacle and carries out a heating only locally in selective manner at locations at which meals to be heated are positioned.

18. Process according to Claim 17, **characterised in that** the information is stored as verification during transportation and storage.

19. Process according to Claim 17, **characterised in that** the information is stored in wireless and contactless manner.

20. Process according to one of Claims 17 to 19, **characterised in that** the temperature signals measured during transportation and storage are stored as information on the information-carrier.

21. Process according to one of Claims 17 to 20, **characterised in that** a warning signal is generated when the expiration of a maximum shelf-life of meals or beverages is detected.

22. Process according to one of Claims 17 to 21, **characterised in that** during transportation in mobile means of transportation a wireless transmission of information to a central data processing unit is carried out via transmitting and receiving systems.

23. Process according to one of Claims 17 to 22, **characterised in that** the transmission of information into and/or out of information-carriers is carried out inductively or capacitively.

24. Process according to one of Claims 17 to 23, **characterised in that** information stored on information-carriers is made capable of being registered visually from outside on electronic display elements which on food trolleys in which meals and beverages are contained.

25. Process according to Claim 24, **characterised in that** selected items of stored information are displayed.

26. Process according to Claim 24 or 25, **characterised in that** information is displayed on display elements even after electrical energy has been switched off.

27. Process according to one of Claims 17 to 26, **characterised in that** a multiplex transmission and storage of data is realised at readout units and/or transmitting units for information with several antennas.

## Revendications

1. Dispositif de contrôle de denrées alimentaires préparées disposées dans un conteneur en forme de tablette sur lequel est fixé un support d'informations qui contient des données relatives à la fraîcheur des denrées alimentaires, ces données pouvant être lues dans au moins une station de lecture, de telle manière qu'un contrôle des conditions de fabrication, de stockage et/ou de réfrigération ainsi que des sites correspondants, soit possible, dispositif dans lequel une unité de lecture des données enregistrées dans le support d'informations équipe un appareil de chauffage pour réchauffer les denrées alimentaires et/ou des boissons et dans lequel ladite unité de lecture de l'appareil est couplée au système de commande de cet appareil de chauffage, **caractérisé en ce que** les données relatives aux conditions de réchauffage et le positionnement des denrées alimentaires ou des boissons à réchauffer ou à ne pas réchauffer, dans les conteneurs en forme de tablette sont restituées, de telle manière que, lors de l'introduction d'un desdits conteneurs en forme de tablette dans l'appareil de chauffage, le réchauffage s'effectue localement et seulement aux endroits ou les denrées alimentaires destinées à être réchauffées sont positionnées.

2. Dispositif selon la revendication 1, **caractérisé en ce que** les données peuvent être enregistrées et lues dans le support d'informations sans contact au moyen d'ondes électromagnétiques.

3. Dispositif selon la revendication 2, **caractérisé en ce que** les données du support d'informations peuvent être lues au moyen d'un technique RFDI.

4. Dispositif selon l'une quelconque des revendications précédentes, **caractérisé en ce que** des données complémentaires relatives au stockage et au transport peuvent être enregistrées dans le support d'informations.

5. Dispositif selon l'une quelconque des revendications précédentes, **caractérisé en ce que** le support d'informations est directement lié au conteneur en forme de tablette.

6. Dispositif selon l'une quelconque des revendications précédentes, **caractérisé en ce qu'**un support d'informations est monté sur un conteneur de denrées alimentaires ou de boissons.

7. Dispositif selon l'une quelconque des revendications précédentes, **caractérisé en ce qu'**il comporte un capteur de température dont les signaux de mesures sont transmissibles au support d'informations.

8. Dispositif selon l'une quelconque des revendications précédentes, **caractérisé en ce qu'**il comporte un élément de stockage d'énergie électrique.

9. Dispositif selon la revendication 8, **caractérisé en ce que** l'élément de stockage d'énergie électrique est rechargeable sans fil et sans contact.

10. Dispositif selon l'une quelconque des revendications précédentes, **caractérisé en ce qu'**il comporte des unités de lecture et/ou de transmission ménagées au voisinage de portes.

11. Dispositif selon la revendication 10, **caractérisé en ce que** des éléments de stockage d'énergie électrique rechargeables par induction ou capacitifs sont montés sur des véhicule de transport de denrées alimentaires.

12. Dispositif selon la revendication 10 ou la revendication 11, **caractérisé en ce que** les habitacles des véhicules de transport de denrées alimentaires sont équipés d'antennes.

13. Dispositif selon la revendication 12, **caractérisé en ce que** les antennes sont logées dans des structures en creux des habitacles.

14. Dispositif selon une des revendications 10 à 13, **caractérisé en ce que** les véhicules de transport de denrées alimentaires sont pourvus d'un dispositif de stockage intermédiaire pour lire les données.

15. Dispositif selon une des revendications 10 à 14, **caractérisé en ce que** les véhicules de transport de denrées alimentaires sont équipés d'indicateurs électroniques pour afficher visuellement des données disponibles sur les supports d'informations et/ou sur le dispositif de stockage intermédiaire.

16. Dispositif selon une des revendications précédentes, **caractérisé en ce que** les unités de lectures et de transmission comportent plusieurs antennes pour transmettre des données.

17. Procédé de contrôle de denrées alimentaires préparées disposées dans un conteneur en forme de tablette sur lequel est fixé un support d'informations qui contient des données relatives à la fraîcheur des dentées alimentaires, ces données pouvant être lues en vue d'un contrôle des conditions de fabrication, de stockage et/ou de réfrigération ainsi que des sites de production et de stockage dans au moins une station de lecture, dans lequel on commande un appareil de chauffage pour réchauffer les denrées alimentaires et/ou les boissons en fonction des données enregistrées dans le support d'informations et lues sans contact par ladite unité de lecture, **caractérisé en ce que** les données sont relatives aux conditions de réchauffage et **en ce que** l'appareil de chauffage est commandé de telle manière que le positionnement relatif des denrées alimentaires et des boissons dans les conteneurs en forme de tablettes est pris en compte pour que, le chauffage s'effectue localement et seulement aux endroits où les denrées alimentaires destinées à être réchauffées sont positionnées.

18. Procédé selon la revendication 17, **caractérisé en ce que** les informations sont enregistrées à titre de contrôle pendant le transport et le stockage.

19. Procédé selon la revendication 17, **caractérisé en ce que** les informations sont enregistrées sans fil et sans contact.

20. Procédé selon l'une des revendications 17 à 19, **caractérisé en ce que** l'on enregistre des signaux de température pendant le transport et le stockage et l'on les enregistre sur le support d'informations en tant que données.

21. Procédé selon l'une des revendications 17 à 20, **caractérisé en ce que** l'on génère un signal d'alarme lors de l'identification de l'échéance d'une durée maximale de conservation des denrées alimentaires ou des boissons.

22. Procédé selon l'une des revendications 17 à 21, **caractérisé en ce que** l'on effectue une transmission d'informations sans fil pendant le transport dans des véhicules au moyen de systèmes d'émission et de transmission vers une unité centrale de traitement des données.

23. Procédé selon l'une des revendications 17 à 22, **caractérisé en ce que** la transmission des données vers ou à partir du support d'informations s'effectue par induction ou par voie capacitive.

24. Procédé selon l'une des revendications 17 à 23, **caractérisé en ce que** les données enregistrées sur les supports d'informations sont affichées sur des éléments d'affichage électroniques qui sont montés sur les véhicules de transport dans lesquels les denrées alimentaires et les boissons sont transportés, de manière visuelle de l'extérieur.

25. Procédé selon la revendication 24, **caractérisé en ce que** des données sélectives parmi les données enregistrées sont affichées.

26. Procédé selon l'une des revendications 24 ou 25, **caractérisé en ce que** des données restent affichées même après une coupure de l'énergie électrique.

27. Procédé selon l'une des revendications 17 à 26, **caractérisé en ce que** l'on réalise une transmission et un enregistrement par liaison multiplexe au moyen de plusieurs antennes lors de la lecture et de la transmission de données.
